# EUROPEAN PATENT APPLICATION

(11) **EP 4 119 975 A1**
(43) Date of publication of application: **18.01.2023**
(21) Application number: 20924762.6
(22) Date of filing: 28.12.2020
(51) Int. Cl.: G01S 7/481, G01S 17/66

(54) **DISTANCE MEASURING DEVICE**

(30) Priority: 11.03.2020 JP 2020041891
(71) Applicant: Panasonic Intellectual Property Management Co., Ltd., Osaka-shi, Osaka 540-6207 (JP)
(72) Inventor: NARUMI Kenji, Osaka-shi, Osaka (JP); KATO Yumiko, Osaka-shi, Osaka (JP)
(74) Representative: Grünecker Patent- und Rechtsanwälte PartG mbB
(86) International application number: PCT/JP2020/049225
(87) International publication number: WO 2021/181841

(57) **Abstract**

A distance measurement apparatus includes a light emitting apparatus capable of emitting first light and second light having a smaller spread than the first light, and changing an emission direction of the second light, a light receiving apparatus; and a processing circuit that controls the light emitting apparatus and the light receiving apparatus and processes a signal output from the light receiving apparatus. The processing circuit performs a process including causing the light receiving apparatus to detect reflected light that occurs due to the first light and reflected light that occurs due to the second light, and generate therefrom first distance data and second distance data, when an object is present outside a first target area included in an area illuminated by the first light, causing the light emitting apparatus to track the object by the second light, and when the object enters the inside of the first target area from the outside of the first target area, causing the light emitting apparatus to stop the tracking by the second light.

## Description

### Technical Field

The present disclosure relates to a distance measurement apparatus.

### Background Art

Various devices have been proposed that are configured to acquire data on the position or the distance of an object by illuminating the object with light and detecting the reflected light from the object.

For example, PTL 1 describes an object detection apparatus including a light projection system including a light source, a light reception system including a photodetector that receives light projected from the light projection system and reflected by an object, a signal processing system to which an output signal from the photodetector is input, and a control system. The control system sets at least one area in a light projection range of the light projection system as an area of interest, and performs control such that the light projection condition of the light projection system or the processing condition of the signal processing system is changed depending on whether light is projected in the area of interest or light is projected in an area other than the area of interest.

PTL 2 discloses a LiDAR (Light Detection and Ranging) apparatus. The LiDAR apparatus includes a first beam scanner, a second beam scanner, and a controller. The first beam scanner scans a first area with a first laser beam with a first scan pattern. The second beam scanner scans a second area which is smaller than the first area with a second laser beam with a second scan pattern. The controller drives the first beam scanner to scan the first area and acquire the data of the reflected light by the first laser beam. One or more objects are determined from the data, and the objects are monitored by driving the second beam scanner to illuminate the inside of the second region.

PTL 3 discloses a distance measurement imaging apparatus. In this distance measurement imaging apparatus, a subject to be distance-measured is identified from the entire imaging target area based on a signal output from the image sensor that detects passive light. This distance measurement imaging apparatus measures the distance to subject by irradiating the subject with a laser beam and detecting the reflected light from the subject.

PTL 4 discloses an apparatus configured to acquire distance information by scanning a space with a light beam and receiving, by an image sensor, reflected light from an object.

### Citation List

### Patent Literature

PTL 1: Japanese Unexamined Patent Application Publication No. 2017-173298
PTL 2: U.S. Patent No. 10,061,020
PTL 3: Japanese Unexamined Patent Application Publication No. 2018-185342
PTL 4: U.S. Patent Application Publication No. 2018/0217258

### Summary of Invention

### Technical Problem

The present disclosure provides a technique that enables efficient acquisition of distance data of an object in a distance measurement target scene.

### Solution to Problem

According to an aspect, the present disclosure provides a distance measurement apparatus including a light emitting apparatus capable of emitting first light and second light having a smaller spread than the first light, and changing an emission direction of the second light, a light receiving apparatus, and a processing circuit that controls the light emitting apparatus and the light receiving apparatus and processes a signal output from the light receiving apparatus, wherein the processing circuit performs a process including generating first distance data based on a first signal obtained by detecting, by the light receiving apparatus, first reflected light which occurs by the first light, generating second distance data based on a second signal obtained by detecting, by the light receiving apparatus, second reflected light which occurs by the second light, when an object is present outside a first target area included in an area illuminated by the first light, causing the light emitting apparatus to track the object by the second light, and when the object enters the inside of the first target area from the outside of the first target area, causing the light emitting apparatus to stop the tracking by the second light.

Comprehensive or specific aspects of the present disclosure may be implemented by a system, an apparatus, a method, an integrated circuit, a computer program, or a storage medium such as a computer-readable storage disk, or may be implemented by an arbitrary combination of a system, an apparatus, a method, an integrated circuit, a computer program, and a storage medium. The computer-readable storage medium may be, for example, a non-transitory storage medium such as a CD-ROM (Compact Disc-Read Only Memory), or the like. The apparatus may include one or more apparatuses. In a case where the apparatus includes two or more apparatuses, the two or more apparatuses may be arranged in one device, or may be separately disposed in two or more separated devices. In the present description and in the claims, the "apparatus" is used to describe not only an apparatus but also a system including a plurality of apparatuses.

### Advantageous Effects of Invention

According to embodiments of the present disclosure, it is possible to efficiently acquire distance data of an object in a distance measurement target scene.

### Brief Description of Drawings

[Fig. 1] Fig. 1 is a block diagram showing an outline of a configuration of a distance measurement apparatus according to an illustrative embodiment of the present disclosure.
[Fig. 2] Fig. 2 is a diagram illustrating an outline of an operation of a distance measurement apparatus.
[Fig. 3] Fig. 3 is a perspective view schematically showing an example of a vehicle on a front part of which a distance measurement apparatus is mounted.
[Fig. 4] Fig. 4 is a side view schematically showing an example of a vehicle traveling on a road.
[Fig. 5] Fig. 5 is a flowchart showing an example of a distance measurement operation executed in a case where an oncoming vehicle is approaching a vehicle traveling on a road.
[Fig. 6A] Fig. 6A is a first diagram schematically showing a manner in which an oncoming vehicle approaches a vehicle traveling on a road.
[Fig. 6B] Fig. 6B is a second diagram schematically showing a manner in which an oncoming vehicle approaches a vehicle traveling on a road.
[Fig. 6C] Fig. 6C is a third diagram schematically showing a manner in which an oncoming vehicle approaches a vehicle traveling on a road.
[Fig. 6D] Fig. 6D is a fourth diagram schematically showing a manner in which an oncoming vehicle approaches a vehicle traveling on a road.
[Fig. 6E] Fig. 6E is a fifth diagram schematically showing a manner in which an oncoming vehicle approaches a vehicle traveling on a road.
[Fig. 7] Fig. 7 is a flowchart showing an example of a distance measurement operation executed in a case where a preceding vehicle is moving away from a vehicle traveling on a road.
[Fig. 8A] Fig. 8A is a first diagram schematically showing a manner in which a preceding vehicle moves away from a vehicle traveling on a road.
[Fig. 8B] Fig. 8B is a second diagram schematically showing a manner in which a preceding vehicle moves away from a vehicle traveling on a road.
[Fig. 8C] Fig. 8C is a third diagram schematically showing a manner in which a preceding vehicle moves away from a vehicle traveling on a road.
[Fig. 8D] Fig. 8D is a fourth diagram schematically showing a manner in which a preceding vehicle moves away from a vehicle traveling on a road.
[Fig. 8E] Fig. 8E is a fifth diagram schematically showing a manner in which a preceding vehicle moves away from a vehicle traveling on a road.
[Fig. 9] Fig. 9 is a diagram schematically showing a first example regarding emission timings of a light emitting apparatus, incident timings of reflected light on a light receiving apparatus, and exposure timings.
[Fig. 10] Fig. 10 is a diagram schematically showing a second example regarding emission timings of a light emitting apparatus, incident timings of reflected light on a light receiving apparatus, and exposure timings.
[Fig. 11] Fig. 11 is a flowchart illustrating a distance measurement operation according to a modification of a first embodiment.
[Fig. 12] Fig. 12 is a flowchart illustrating a distance measurement operation according to a modification of a second embodiment.

### Description of Embodiments

Illustrative embodiments of the present disclosure are described below. Note that each embodiment described below is for illustrating a comprehensive or specific example. Numerical values, shapes, components, positions of components, and a manner in which components are connected, steps, an order of steps, and the like shown in the following embodiments are merely examples, and are not intended to limit the present disclosure. Among components described in the following embodiments, those components that are not described in independent claims indicating highest-level concepts of the present disclosure are optional. Each figure provides a schematic view and is not necessarily exactly illustrated. In figures, substantially the same components are denoted by the same reference numerals, and duplicate descriptions thereof may be omitted or simplified.

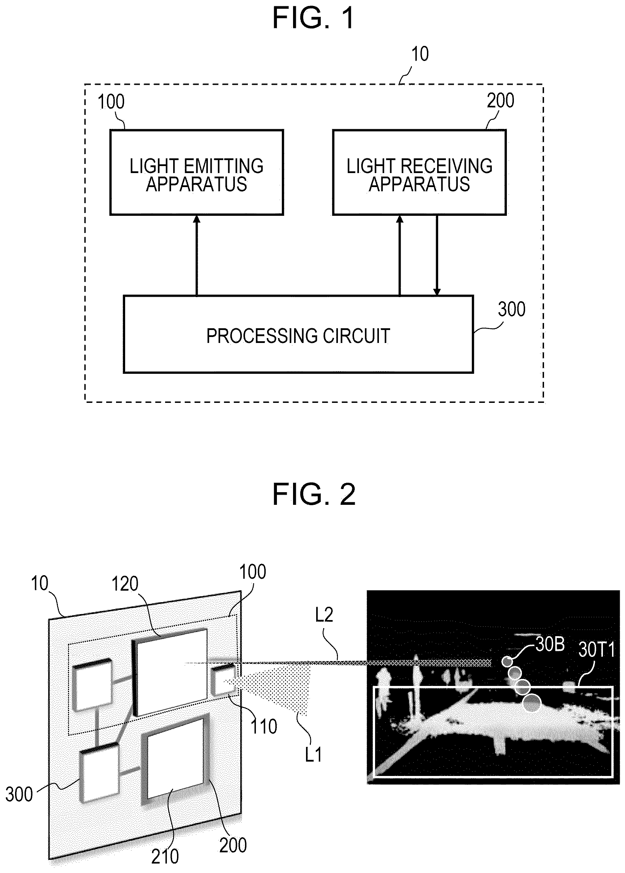

First, an illustrative embodiment of the present disclosure is briefly described with reference to Figs. 1 to 4.

Fig. 1 is a block diagram showing an outline of a configuration of a distance measurement apparatus 10 according to an illustrative embodiment of the present disclosure. The distance measurement apparatus 10 according to the present embodiment includes a light emitting apparatus 100, a light receiving apparatus 200, and a processing circuit 300. The distance measurement apparatus 10 may be used, for example, as a part of a LiDAR system mounted on a vehicle. The distance measurement apparatus 10 is configured to illuminate a scene to be measured with light, generate distance data, and output the generated distance data. In the present disclosure, the term "distance data" is used to describe various data representing the absolute distance of a measurement point from a reference point or the relative depth between measurement points. The distance data may be, for example, distance image data or three-dimensional point cloud data. The distance data is not limited to data that directly represents the distance or depth, but may be sensor data itself for calculating the distance or depth, that is, Raw data. The Raw data may be, for example, luminance data generated based on the intensity of light received by the light receiving apparatus 200. The luminance data may be, for example, luminance image data.

The light emitting apparatus 100 emits a plurality of types of light having different degrees of spread. For example, the light emitting apparatus 100 can emit a light beam with a relatively large spread or flash light toward a scene, emit a light beam having a small spread toward a specific object in a scene, and so on. In other words, the light emitting apparatus 100 can emit first light with a relatively large spread and second light for illuminating an area smaller than an area illuminated by the first light. The light emitting apparatus 100 may include a first light source that emits first light and a second light source that emits second light. Alternatively, the light emitting apparatus 100 may include one light source capable of emitting both the first light and the second light.

The light receiving apparatus 200 detects reflected light that occurs as a result of emitting light from the light emitting apparatus 100, and outputs a signal corresponding to the intensity of the reflected light. The light receiving apparatus 200 includes, for example, one or more image sensors. When a signal is output from the image sensor having a plurality of two-dimensionally arranged photodetection cells (hereinafter, also referred to as pixels), the signal includes information on the two-dimensional intensity distribution of the reflected light. The light receiving apparatus 200 detects first reflected light that occurs as a result of illumination of first light, and outputs a first signal corresponding to the intensity of the first reflected light. The light receiving apparatus 200 also detects second reflected light that occurs as a result of illumination of second light, and outputs a second signal corresponding to the intensity of the second reflected light. The light receiving apparatus 200 may include a first image sensor that detects the first reflected light and outputs the first signal, and a second image sensor that detects the second reflected light and outputs the second signal. Alternatively, the light receiving apparatus 200 may include one image sensor capable of detecting the first reflected light and the second reflected light and outputting the first signal and second signal corresponding to the first and second reflected light. In the case where the light receiving apparatus 200 includes one sensor, the configuration of the light receiving apparatus 200 can be simplified.

The processing circuit 300 controls the light emitting apparatus 100 and the light receiving apparatus 200, and processes the signal output from the light receiving apparatus 200. The processing circuit 300 includes one or more processors and one or more storage media. The storage medium includes a memory such as a RAM, a ROM, or the like. The storage medium may store a computer program executed by the processor and various data generated in the process. The processing circuit 300 may be a combination of a plurality of circuits. For example, the processing circuit 300 may include a control circuit for controlling the light emitting apparatus 100 and the light receiving apparatus 200, and a signal processing circuit for processing the signal output from the light receiving apparatus 200.

The processing circuit 300 may be disposed in a housing separate from a housing in which the light emitting apparatus 100 and the light receiving apparatus 200 are disposed. The processing circuit may be installed at a location away from the light emitting apparatus 100 and the light receiving apparatus 200, and the processing circuit may remotely control the light emitting apparatus 100 and the light receiving apparatus 200 via wireless communication.

Fig. 2 is a diagram illustrating an outline of an operation of the distance measurement apparatus 10. Fig. 2 schematically shows an example of the distance measurement apparatus 10 and an example of a distance image that can be generated by the distance measurement apparatus 10. In the example shown in Fig. 2, the light emitting apparatus 100 includes a first light source 110 and a second light source 120. The first light source 110 is configured to emit flash light L1 as first light. The second light source 120 is configured to emit a light beam L2 as second light. The second light source 120 is capable of changing the emission direction of the light beam L2. This makes it possible to scan a particular area in space with the light beam L2. The light receiving apparatus 200 includes an image sensor 210. In this example, the image sensor 210 is a TOF image sensor capable of measuring a distance by TOF (Time of Flight). The image sensor 210 is capable of generating a distance image of a scene subjected to the distance measurement by using a technique of direct TOF or indirect TOF. The processing circuit 300 controls the first light source 110, the second light source 120, and the image sensor 210.

In the present embodiment, the distance measurement apparatus 10 acquires distance data of a specific object such as a pedestrian, a car, a two-wheeled vehicle, or a bicycle by using the flash light L1 and the light beam L2. The distance measurement apparatus 10 changes its operation mode depending on whether or not the object is present in a first target area 30T1 included in an area illuminated by the flash light L1. In the example shown in Fig. 2, the first target area 30T1 is a rectangular area included in the area illuminated by the flash light L1 in an image acquired by the light receiving apparatus 200. The first target area 30T1 is not limited to a rectangular area, and it may be an elliptic area or the like. Before the distance measurement operation, the processing circuit 300 first determines the first target area 30T1. The first target area 30T1 may be set, for example, as an area defined by coordinates in a real three-dimensional space or an area defined by coordinates in a two-dimensional plane of an image acquired by the light receiving apparatus 200. In this example, when the object is present outside the first target area 30T1, the distance measurement apparatus 10 repeatedly performs the operation of illuminating the object with the light beam L2 and acquiring the distance data. On the other hand, when the object is present inside the first target area 30T1, the distance measurement apparatus 10 repeatedly performs the operation of illuminating the object with the flash light L1 and acquiring the distance data. The operation of the processing circuit 300 is described in further detail below for the case where the object moves outside the first target area 30T1 and for the case where the object moves inside the first target area 30T1.

When the object is present outside the first target area 30T1, the processing circuit 300 causes the second light source 120 to emit the light beam L2, and causes the image sensor 210 to detect the reflected light that occurs as a result of reflection of the light beam L2 and output the second signal corresponding to the amount of the detected light at each pixel. The processing circuit 300 generates distance data or luminance data of the object in the scene for each frame based on the second signal and outputs the resultant distance data or luminance data.

The processing circuit 300 calculates the moving direction of the object based on the distance data or the luminance data over a plurality of frames, and causes the second light source 120 to emit the light beam L2 in accordance with the calculated moving direction. Thus, the processing circuit 300 can cause the beam spot area 30B of the light beam L2 to move following the object. A plurality of open circles shown in a right-hand side part in Fig. 2 represent an example of a series of the beam spot areas 30B illuminated by the light beam L2. The size of the beam spot area 30B varies depending on the angle of view of the scene captured by the image sensor 210, the spread angle of the light beam L2, and the distance of the object. While the object is present outside the first target area 30T1, the distance measurement apparatus 10 may not perform the emission of the flash light L1 or may acquire the distance data inside the first target area 30T1 using the flash light L1.

When the object is present inside the first target area 30T1, the processing circuit 300 causes the first light source 110 to emit the flash light L1, and causes the image sensor 210 to detect the reflected light that occurs as a result of reflection of the flash light L1 and output the first signal corresponding to the amount of the detected light at each pixel. The degree of spread of the flash light L1 is larger than the degree of spread of the light beam L2, while the energy density of the flash light L1 is lower than the energy density of the light beam L2. Therefore, the flash light L1 illuminates the first target area 30T1 which is wide and at a relatively short distance. As will be described later, the processing circuit 300 repeatedly performs an operation of detecting and storing the position of an object present in the first target area 30T1 based on the first signal. In the following description, this operation may be referred to as "internally tracking an object". Since the flash light L1 can illuminate a relatively wide area, the emission direction of the flash light L1 may be fixed. However, the light emitting apparatus 100 may be configured such that the emission direction of the flash light L1 can be changed.

By repeating the operation described above, the processing circuit 300 outputs, for example, distance data or luminance data of the object at a predetermined frame rate.

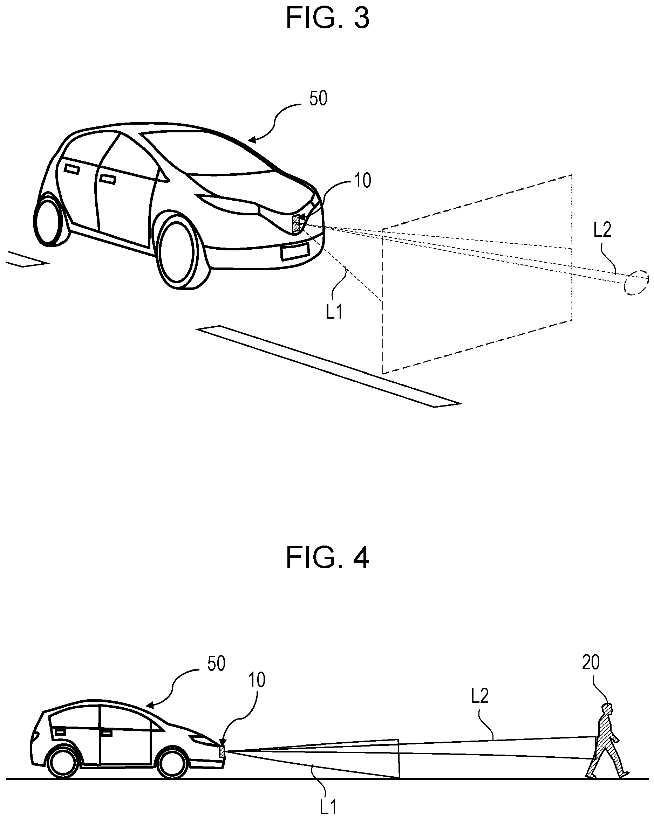

Fig. 3 is a perspective view schematically showing an example of a vehicle 50 on a front part of which the distance measurement apparatus 10 is mounted. In the example shown in Fig. 3, the distance measurement apparatus 10 on the vehicle 50 emits the flash light L1 and the light beam L2 in a direction forward away from the vehicle 50. The mounting position of the distance measurement apparatus 10 on the vehicle 50 is not limited to the front part thereof, but it may be mounted on an upper part, a side part, or a rear part of the vehicle 50. The mounting position is appropriately determined according to the direction in which the object is measured.

Fig. 4 is a side view schematically showing an example of the vehicle 50 traveling on a road. The degree of spread of the light beam L2 is smaller than the degree of spread of the flash light L1, and thus the illumination energy density of the light beam L2 is higher than the illumination energy density of the flash light L1. Therefore, the light beam L2 is suitable than the flash light L1 for illuminating a distant object 20. In the example shown in Fig. 4, the distant object 20 is a pedestrian, but the object 20 may be an object other than a human.

### (First Embodiment)

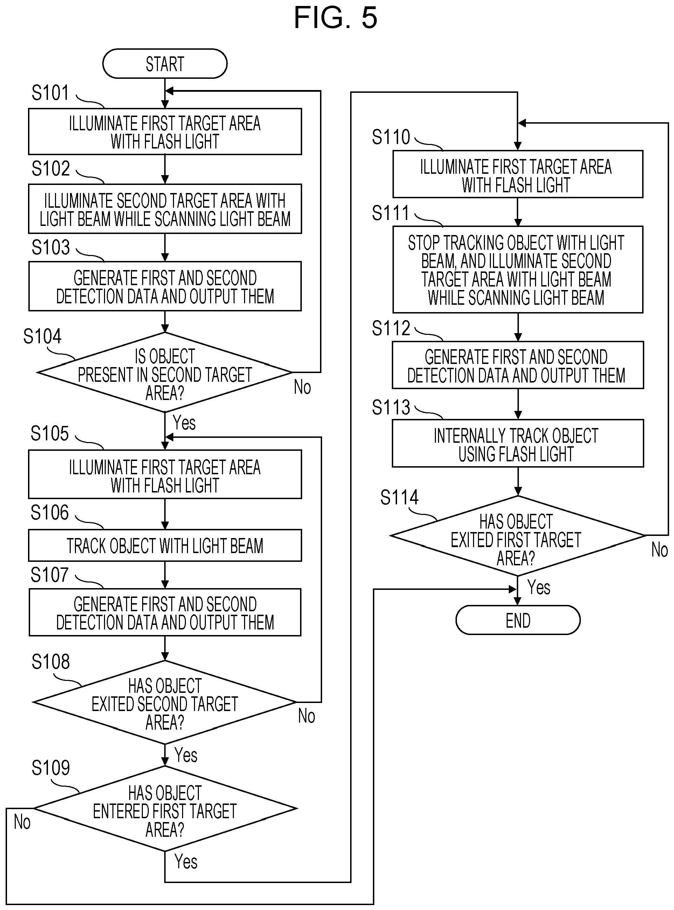

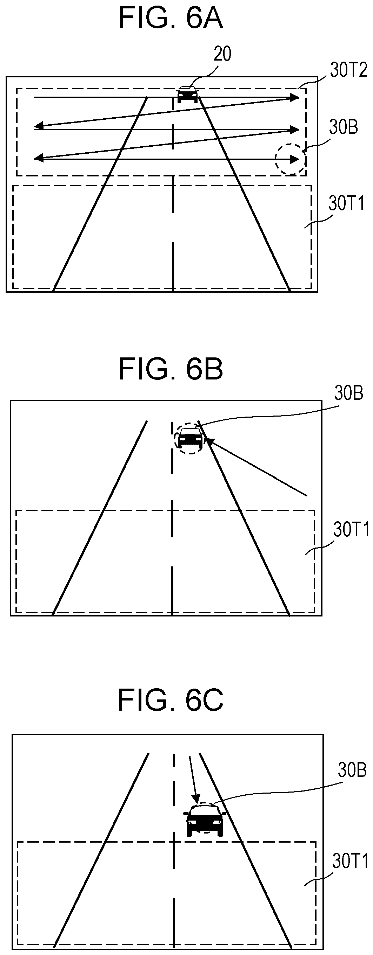

A first illustrative embodiment of the present disclosure is described below with reference to Figs. 5 to 6E. Fig. 5 is a flowchart showing an example of a distance measurement operation executed in a case where an object such as an oncoming vehicle is approaching a vehicle 50 traveling on a road. In the distance measurement operation, the processing circuit 300 executes operations in step S101 to step S114 shown in the flowchart of Fig. 5. Figs. 6A to 6E are diagrams schematically showing a manner in which an oncoming vehicle approaches the vehicle 50 traveling on a road. Time elapses in the order of Figs. 6A to 6E. Figs. 6A to 6E each schematically show an example of an image acquired by imaging, from the front of the vehicle 50, a scene including the oncoming vehicle. Of two areas each surrounded by a broken line arranged vertically in the image shown in Fig. 6A, a lower area is the first target area 30T1 illuminated with the flash light L1, and an upper area is the second target area 30T2 scanned with the light beam L2. The second target area 30T2 is located outside the first target area 30T1. The processing circuit 300 determines the first target area 30T1 and the second target area 30T2 before the distance measurement operation. The method of determining the first target area 30T1 and the second target area 30T2 will be described later. The operation in each step shown in Fig. 5 is described below.

### (Step S101)

The processing circuit 300 causes the light emitting apparatus 100 to illuminate the first target area 30T1 in the scene with the flash light L1. The degree of spread of the flash light L1 is larger than the degree of spread of the light beam L2. In this example, the first target area 30T1 corresponds to distances relatively closer than the second target area 30T2.

### (Step S102)

The processing circuit 300 causes the light emitting apparatus 100 to continuously emit the light beam L2 while changing the emission direction of the light beam L2, thereby scanning the second target area 30T2 in the scene with the light beam L2. In Fig. 6A, arrows represent a scanning trajectory of a beam spot area 30B. In this example, the second target area 30T2 corresponds to distances relatively farther than the first target area 30T1.

### (Step S103)

The processing circuit 300 causes the light receiving apparatus 200 to detect first reflected light that occurs as a result of the illumination of the flash light L1 and second reflected light that occurs as a result of the illumination of the light beam L2, and causes the light receiving apparatus 200 to output the first signal and the second signal. The processing circuit 300 generates first detection data and second detection data indicating the position or distance of the object 20 based on the first signal and the second signal, respectively, and outputs the resultant first detection data and second detection data. The processing circuit 300 stores the first detection data and the second detection data in a memory (not shown) in the processing circuit 300. The first detection data may be, for example, distance data within the first target area 30T1 shown in Fig. 2. The second detection data may be, for example, distance data within the beam spot area 30B shown in Fig. 2. In the present description, the distance data within the first target area 30T1 is referred to as "first distance data", and the distance data within the beam spot area 30B is referred to as "second distance data". As shown in Fig. 2, the distance data within the first target area 30T1 and the distance data within the beam spot area 30B may be integrated and output. This integration makes it easier to grasp the distance data of the object 20 at a long distance and a short distance. Instead of distance data, luminance data may be generated and output. As the second detection data, the detection data in a plurality of beam spot areas 30B having different illumination directions may be integrated and output.

The processing circuit 300 may determine the behavior of the vehicle in driving assistance or automatic driving based on the detection data of distance data or luminance data of the object 20 stored in time series in the memory. The processing circuit 300 may display information related to the distance data of the object 20 on a display or an instrument (not shown) in the vehicle 50.

### (Step S104)

The processing circuit 300 determines whether or not the object 20 to be tracked is present in the second target area 30T2 based on the second detection data. The processing circuit 300 may determine what the object 20 is by recognizing a specific object by a known image recognition technique based on distance data or luminance data. A particular object is, for example, a car, a motorcycle, a bicycle, or a pedestrian. When a plurality of objects are present, the priorities of the objects are determined according to the types of the objects, and an object having the highest priority may be the object 20. In a case where the object 20 is not present in the second target area 30T2, the processing circuit 300 repeatedly executes the operations in steps S101 to S104, and continues the search for the object 20 to be tracked. In a case where the object 20 is present in the second target area 30T2 as shown in Fig. 6A, the process proceeds to step S105.

### (Step S105)

The processing circuit 300 causes the light emitting apparatus 100 to illuminate the first target area 30T1 in the scene with the flash light L1. This operation is the same as the operation in step S101.

### (Step S106)

The processing circuit 300 determines the emission direction of the light beam L2 based on the information regarding the position of the object 20 included in the second detection data, and causes the light emitting apparatus 100 to emit the light beam L2 toward the object 20. The information regarding the position of the object 20 may be, for example, a value of a distance or luminance of the object 20. The processing circuit 300 detects the object 20 based on the information regarding the position of the object 20, and stops the scanning operation by the light beam L2 as shown in Fig. 6B. After that, in response to the detection of the object 20, the processing circuit 300 tracks the object 20 by the light beam L2 as shown in Fig. 6C. As a result, at least a part of the object 20 continues to be in the area 30B of the beam spot. The processing circuit 300 determines the position of the object 20 being tracked based on the second detection data. The position of the object 20 may be determined using external data acquired from an external sensor such as a camera, instead of using the second detection data. Alternatively, both the second detection data and the external data may be used.

### (Step S107)

The processing circuit 300 generates and outputs the first detection data and the second detection data by executing an operation similar to that in step S103. The processing circuit 300 stores the first detection data and the second detection data in a memory (not shown) in the processing circuit 300.

### (Step S108)

The processing circuit 300 determines whether or not the object 20 has exited the second target area 30T2 based on the information regarding the position of the object 20 included in the second detection data. The determination may be made, for example, based on the distance value of the object 20 included in the second detection data. For example, in a case where the value of the distance of the object 20 included in the second detection data is larger than a first reference value or smaller than a second reference value, it can be determined that the object 20 has exited the second target area 30T2. The first reference value and the second reference value respectively correspond to the largest and smallest distances in the second target area 30T2 shown in Fig. 6A. The first reference value and the second reference value respectively may be, for example, 200 m and 50 m. The determination may be made based on the luminance value of the object 20 included in the second detection data. For example, in a case where the luminance value of the object 20 included in the second detection data is larger than a third reference value or smaller than a fourth reference value, it can be determined that the object 20 has exited the second target area 30T2. The third reference value and the fourth reference value respectively correspond to the luminance values at the smallest and largest distances, respectively, in the second target area 30T2 shown in Fig. 6A. The illumination energy density of the light beam L2 is relatively high, and thus the third reference value may be, for example, 90% of the saturation value of the luminance value in the light receiving apparatus 200. The fourth reference value may be, for example, 1% of the saturation value of the luminance value.

In a case where the object 20 has not exited the second target area 30T2, the processing circuit 300 repeatedly executes the operations in steps S105 to S108, and continues tracking the object 20 by the light beam L2. In a case where the object 20 has exited the second target area 30T2, the process proceeds to step S109.

### (Step S109)

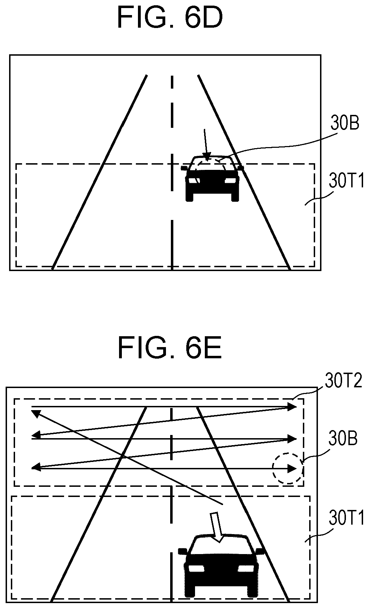

In a case where the object 20 has exited the second target area 30T2 as shown in Fig. 6D, the processing circuit 300 determines whether or not the object 20 has entered the first target area 30T1. For example, in a case where the value of the distance of the object 20 included in the second detection data is equal to or smaller than a predetermined reference value, it may be determined that the object 20 has entered the first target area 30T1. The reference value corresponds to the largest distance in the first target area 30T1, and may be, for example, 50 m. Alternatively, when it becomes possible to obtain the value of the distance of the object 20 based on the first detection data, it may be determined that the object 20 has entered the first target area 30T1. The determination may be made based on the luminance value of the object 20 included in the second detection data. For example, when the luminance value of the object 20 is equal to or higher than a predetermined reference value, it may be determined that the object 20 has entered the first target area 30T1. This reference value corresponds to the luminance value at the largest distance in the first target area 30T1, and may be, for example, 90% of the luminance saturation value. When the object 20 has not entered the first target area 30T1, the processing circuit 300 ends the tracking of the object 20 by the flash light L1 and the light beam L2. A situation in which the object 20 exits the second target area 30T2 but does not enter the first target area 30T1 may occur, for example, when the object 20 crosses a road. In this case, the processing circuit 300 may restart the operation in step S101.

### (Step S110)

In a case where the object 20 enters the first target area 30T1 as shown in Fig. 6D, the processing circuit 300 causes the light emitting apparatus 100 to illuminate the first target area 30T1 in the scene with the flash light L1 as in step S101.

### (Step S111)

The processing circuit 300 stops tracking the object 20 by the light beam L2. After that, as shown in Fig. 6E, the processing circuit 300 scans a scan area with the light beam as in step S102.

### (Step S112)

The processing circuit 300 generates the first detection data and the second detection data and outputs them as in step S103. The processing circuit 300 stores the first detection data and the second detection data in a memory (not shown) in the processing circuit 300.

### (Step S113)

As shown in Fig. 6E, the processing circuit 300 internally tracks the object 20 by the flash light L1. In Fig. 6E, an open arrow indicates that the internal tracking is being performed. This operation corresponds to storing the change in the position of the object 20 in addition to the first detection data. In this respect, the operation is different from the operation of tracking the object 20 by the light beam L2. The degree of spread of the flash light L1 is larger than the degree of spread of the light beam L2. Therefore, the illumination direction of the flash light L1 may be fixed. The illumination direction of the flash light does not necessarily need to be changed as the object 20 moves. The processing circuit 300 determines the position of the object 20 being tracked based on the first detection data. External data acquired from an external sensor such as a camera may be used instead of the first detection data. Alternatively, both the first detection data and the external data may be used.

### (Step S114)

The processing circuit 300 determines whether or not the object 20 has exited the first target area 30T1 based on the first detection data. The situation where the object 20 exits the first target area 30T1 may occur, for example, when an oncoming vehicle passes by the vehicle 50. When the object 20 has exited the first target area 30T1, the processing circuit 300 ends the tracking of the object 20 by the flash light L1 and the light beam L2. The processing circuit 300 may restart the operation in step S101. In a case where the object 20 has not exited the first target area 30T1, the processing circuit 300 repeatedly executes the operations in steps S110 to S114, and continues the internal tracking of the object 20 by the flash light L1.

The following effects can be obtained by the operation in steps S101 to S114 according to the first embodiment. That is, when the object 20 moves into the first target area 30T1 existing near the vehicle 50, it becomes unnecessary for the processing circuit 300 to track the object 20 by the light beam L2. This makes it possible for the processing circuit 300 to efficiently track the distant object 20 moving in the second target area 30T2 by the light beam L2. As a result, data indicating the position of the object 20 in the distance measurement target scene can be efficiently acquired, and this results in an increase in the amount of acquired data. Furthermore, it is possible to acquire necessary data in a short time as compared with a case where the scanning by the light beam L2 is performed over the entire distance measurement target scene.

### (Second Embodiment)

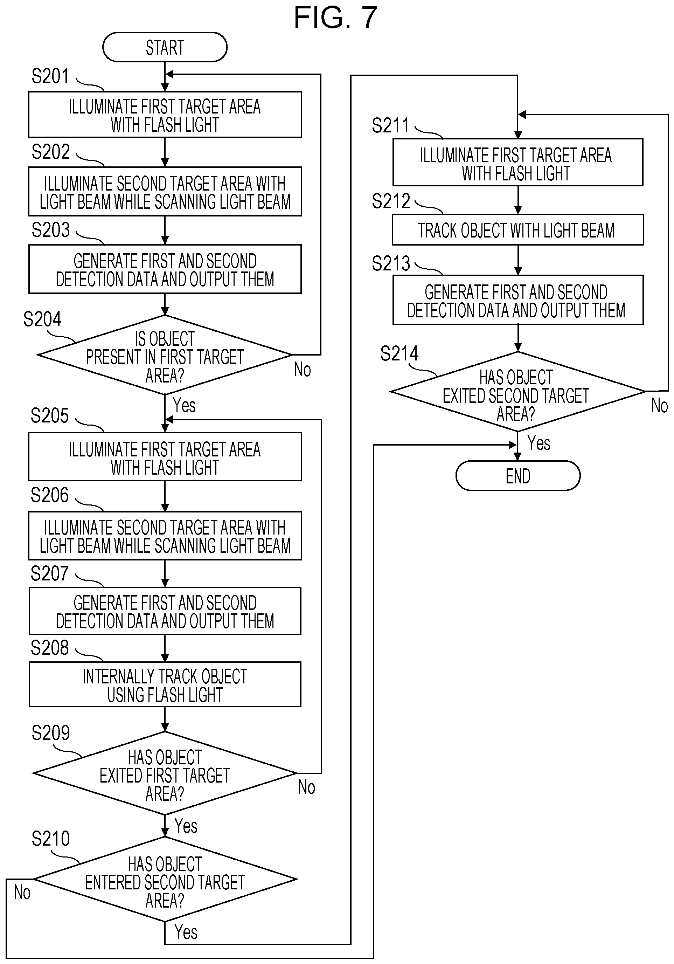

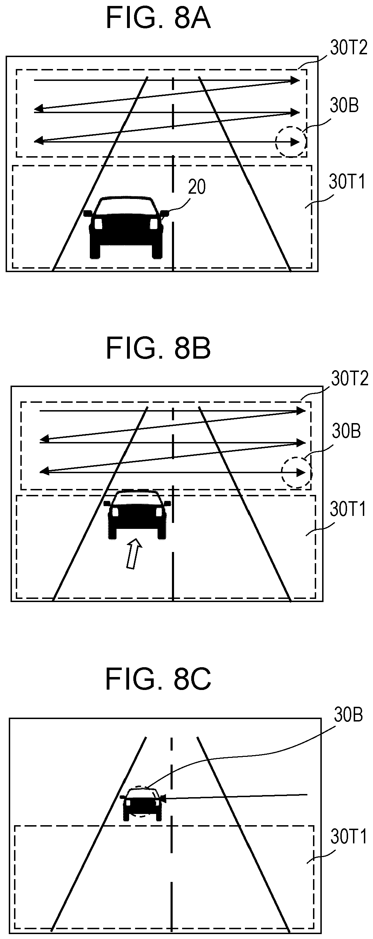

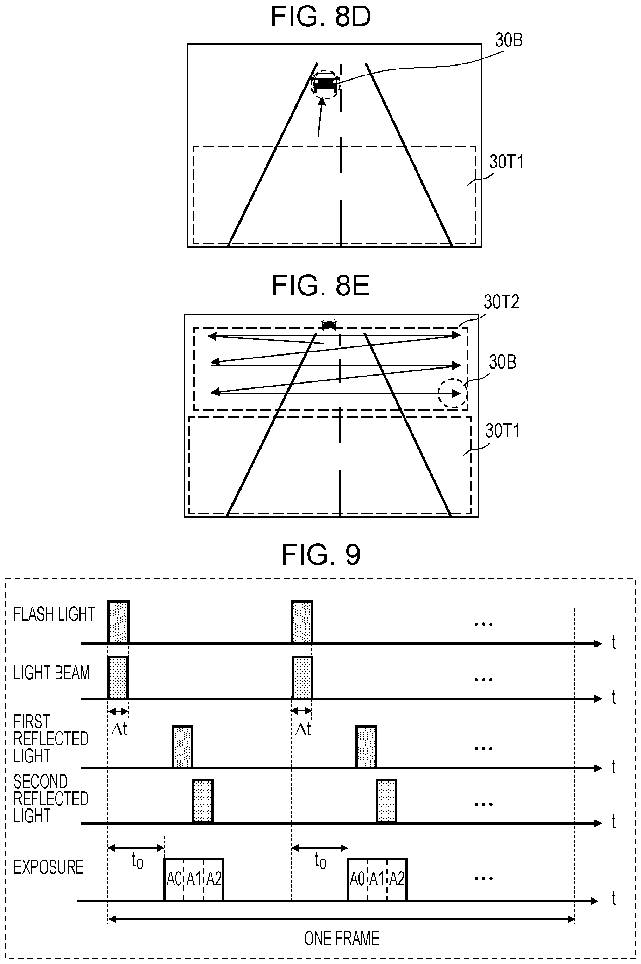

A second illustrative embodiment of the present disclosure is described below with reference to Fig. 7 and Fig. 8E. A description similar to a description in the first embodiment may be omitted. Fig. 7 is a flowchart of a distance measurement operation according to the second illustrative embodiment of the present disclosure for a case where a preceding vehicle moves away from the vehicle 50 traveling on a road. In the distance measurement operation, the processing circuit 300 executes operations in steps S201 to S214 shown in the flowchart of Fig. 7. Figs. 8A to 8E are diagrams schematically showing a manner in which a preceding vehicle moves away from the vehicle 50 traveling on a road. Time elapses in the order of Figs. 8A to 8E. The operation in each step shown in Fig. 7 is described below.

### (Step S201)

The processing circuit 300 causes the light emitting apparatus 100 to illuminate the first target area 30T1 in the scene with the flash light L1. This operation is the same as the operation in step S101 in the first embodiment.

### (Step S202)

The processing circuit 300 causes the light emitting apparatus 100 to illuminate the second target area 30T2 in the scene with the light beam L2 while scanning the light beam L2 by changing the emission direction of the light beam L2. This operation is the same as the operation in step S102 in the first embodiment.

### (Step S203)

The processing circuit 300 causes the light receiving apparatus 200 to detect first reflected light that occurs as a result of the illumination of the flash light L1 and second reflected light that occurs as a result of the illumination of the light beam L2, and causes the light receiving apparatus 200 to output the first signal and the second signal. The processing circuit 300 generates first detection data and second detection data indicating the position of the object 20 based on the first signal and the second signal and outputs them. This operation is the same as the operation in step S103 in the first embodiment.

### (Step S204)

The processing circuit 300 determines whether or not the object 20 to be tracked is present in the first target area 30T1 based on the first detection data. The method for determining what the object 20 it the same as the method described above in step S104 in the first embodiment. In a case where the object 20 is not present in the first target area 30T1, the processing circuit 300 repeatedly executes the operations in steps S201 to S204, and continues the search for the object 20 to be tracked.

### (Step S205)

In a case where the object 20 is present in the first target area 30T1 as shown in Fig. 8A, the processing circuit 300 performs an operation similar to that in step S201.

### (Step S206)

The processing circuit 300 executes an operation similar to that executed in step S202.

### (Step S207)

The processing circuit 300 executes an operation similar to that executed in step S203.

### (Step S208)

As shown in Fig. 8B, the processing circuit 300 internally tracks the object 20 by the flash light L1. This operation is the same as the operation in step S113 in the first embodiment.

### (Step S209)

The processing circuit 300 determines whether or not the object 20 has exited the first target area 30T1 based on the information regarding the position of the object 20 included in the first detection data. For example, in a case where the value of the distance of the object 20 included in the first detection data is equal to or larger than a predetermined reference value, it may be determined that the object 20 has exited the first target area 30T1. The reference value corresponds to the largest distance in the first target area 30T1. The reference value for the distance value may be, for example, 50 m. In a case where the value of the distance of the object 20 cannot be acquired based on the first detection data, it may be determined that the object 20 has exited the first target area 30T1. The determination may be made based on the luminance value of the object 20 included in the first detection data. For example, when the luminance value of the object 20 is equal to or lower than a predetermined reference value, it may be determined that the object 20 has exited the first target area 30T1. This reference value corresponds to the luminance value at the largest distance in the first target area 30T1. The illumination energy density of the flash light L1 is relatively low, and thus the reference value of the luminance value may be, for example, 10% of the saturation value of the luminance value. In a case where the object 20 has not exited the first target area 30T1, the processing circuit 300 repeatedly executes the operations in steps S205 to S209, and continues the internal tracking of the object 20 by the flash light L1.

### (Step S210)

In a case where the object 20 has exited the first target area 30T1 as shown in Fig. 8C, the processing circuit 300 determines whether or not the object 20 has entered the second target area 30T2. The determination may be made, for example, based on the distance value of the object 20 included in the second detection data. For example, in a case where the value of the distance of the object 20 included in the second detection data is larger than a first reference value or smaller than a second reference value, it can be determined that the object 20 has exited the second target area 30T2. The first reference value and the second reference value respectively correspond to the largest and smallest distances in the second target area 30T2 shown in Fig. 8A. The first reference value and the second reference value respectively may be, for example, 200 m and 50 m. The determination may be made based on the luminance value of the object 20 included in the second detection data. For example, in a case where the luminance value of the object 20 included in the second detection data is larger than a third reference value or smaller than a fourth reference value, it can be determined that the object 20 has exited the second target area 30T2. The third reference value and the fourth reference value correspond to the luminance values at the smallest and largest distances, respectively, in the second target area 30T2 shown in Fig. 8A. The third reference value and the fourth reference value respectively may be, for example, 90% and 1% of the saturation value of the luminance value. When the object 20 has not entered the second target area 30T2, the processing circuit 300 ends the tracking of the object 20 by the flash light L1 and the light beam L2. A situation in which the object 20 exits the first target area 30T1 but does not enter the second target area 30T2 may occur, for example, when the object 20 crosses a road. The processing circuit 300 may restart the operation in step S201.

### (Step S211)

The processing circuit 300 executes an operation similar to that executed in step S201.

### (Step S212)

The processing circuit 300 determines the emission direction of the light beam L2 based on the information regarding the position of the object 20 included in the second detection data, and causes the light emitting apparatus 100 to emit the light beam L2 toward the object 20. In other words, the processing circuit 300 stops the scanning operation with the light beam L2 as shown in Fig. 8C, and tracks the object 20 with the light beam L2 as shown in Fig. 8D.

### (Step S213)

The processing circuit 300 executes an operation similar to that executed in step S203.

### (Step S214)

The processing circuit 300 determines whether or not the object 20 has exited the second target area 30T2 based on the second detection data. In a case where the object 20 has exited the second target area 30T2, the processing circuit 300 ends the tracking of the object 20 with the flash light L1 and the light beam L2. The processing circuit 300 may restart the operation in step S201. In a case where the object 20 has not exited the second target area 30T2, the processing circuit 300 repeatedly executes the operations in steps S211 to S214, and continues tracking the object 20 by the light beam L2.

By the operations in steps S201 to S214 according to the second embodiment, it is possible to obtain effects similar to those obtained according to the first embodiment.

In an actual situation, both an oncoming vehicle approaching the vehicle 50 as in the first embodiment and a preceding vehicle moving away from the vehicle 50 as in the second embodiment may be present at the same time. In this case, one distance measurement apparatus 10 provided on the vehicle 50 may execute a first operation for measuring the distance to the oncoming vehicle approaching the vehicle 50 and a second operation for measuring the distance to the preceding vehicle moving away from the vehicle 50 such that the first and second operations are executed in different frames. The one distance measurement apparatus 10 may execute the first operation and the second operation in successive frames, or may execute the first operation for a predetermined number of frames and then execute the second operation for the predetermined number of frames. The first operation and the second operation may be interchanged. Alternatively, two distance measurement apparatuses 10 may be provided on the vehicle 50, and one of the two distance measurement apparatuses 10 may measure the distance to the oncoming vehicle approaching the vehicle 50 and the other may measure the distance to the preceding vehicle moving away from the vehicle 50.

### (Determination of the first target area 30T1 and the second target area 30T2)

Next, a method for determining the first target area 30T1 is described.

The first target area 30T1 may be determined based on distance values. The first target area 30T1 may be an area within which the distance value as measured from the distance measurement apparatus 10 is within a range from 20 m (inclusive) to 50 m (inclusive). Alternatively, the first target area 30T1 may be determined based on luminance values of reflected light from the object 20. One reason for this is that, especially in the case of flash light, the intensity of the illumination light is not constant the irradiation range. Another reason is that when the object 20 is present at a certain distance, the luminance value detected by the image sensor 210 for reflected light from the object 20 may vary depending on the reflectance or scattering property of the object 20 or depending on the direction of the normal on the surface of the object 20.

An example of the luminance value of reflected light is a luminance value of reflected light from the object 20 which occurs as a result of the illumination of the flash light L1. The illumination energy density of the flash light L1 is relatively low, and the first target area 30T1 may be an area in which the luminance value of the reflected is in a range equal to or larger than 10% of the saturation value.

Another example of the luminance value of reflected light is a luminance value of reflected light from the object 20 which occurs as a result of the illumination of the light beam L2. The illumination energy density of the light beam L2 is relatively high, and the first target area 30T1 may be an area in which the luminance value of the reflected light is in a range equal to or larger than 90% of the saturation value.

Alternatively, the first target area 30T1 may be determined based on at least one parameter selected from the group consisting of the first detection data, the second detection data, and external data. The above-described first reference value and second reference value of the distance value may be determined from distance data obtained from at least one selected from the group consisting of the first detection data, the second detection data, and the external data. The above-described third reference value and second reference value of the luminance value may be determined from luminance data obtained from at least one selected from the group consisting of the first detection data, the second detection data, and the external data.

Alternatively, the first target area 30T1 may be determined based on the confidence level of the position of the object 20. The confidence level of the position of the object 20 may be defined based on, for example, the variance of the position of the object 20 determined from at least one selected from a group consisting of a plurality of first detection data, a plurality of second detection data, and a plurality of external data. The processing circuit 300 generates and outputs the first detection data or the second detection data a plurality of times, or acquires external data from an external apparatus a plurality of times, and calculates the confidence level of the position of the object 20. When the variance of the position of the object 20 is larger than a predetermined reference value in a particular area, the confidence level of the position of the object 20 in this area is regarded as low. Thus, the first target area 30T1 may be defined by the area in which the variance is equal to or greater than the predetermined reference value.

The first target area 30T1 may be determined based on at least one selected from the group consisting of the luminance value, the distance value, and the external data. The first target area 30T1 may be changed appropriately.

Next, a method for determining the second target area 30T2 is described. The second target area 30T2 may be determined by a method similar to the method for determining the first target area 30T1.

The second target area 30T2 may be an area in which the distance value as measured from the distance measurement apparatus 10 is, for example, within a range from 50 m (inclusive) to 200 m (inclusive). Alternatively, the second target area 30T2 may be an area in which the luminance value of reflected light which occurs as a result of illumination of the light beam L2 is in a range from 1% (inclusive) to 90% (inclusive) of the saturation value of the luminance value. Alternatively, the second target area 30T2 may be, for example, an area which is not included in the first target area 30T1 and in which distance data or luminance data can be generated based on reflected light which occurs as a result of illumination of the light beam L2.

### (Operations of light emitting apparatus and light receiving apparatus)

Next, operations of light emitting apparatus and light receiving apparatus are described.

Fig. 9 is a diagram schematically showing a first example regarding emission timings of the flash light L1 and the light beam L2 emitted from the light emitting apparatus 100, incidence timings of the first reflected light and the second reflected light on the light receiving apparatus 200, and exposure timings of the light receiving apparatus 200, which occur in one frame. The example shown in Fig. 9 relates to the operation of the indirect TOF. The exposure period for light detection by the image sensor 210 is set to three times the light emission period Δt of the flash light L1 and the light beam L2. A0 to A2 respectively denote the amounts of light detected by the light receiving apparatus 200 in first to third periods obtained by dividing the exposure period into three equal parts. The difference between the light emission start timing and the exposure start timing is denoted by τ. Using the technique of indirect TOF, the processing circuit 300 calculates the distance to the object 20 based on the detected light amounts A0 to A2 and the timing difference to. Let τ denote the round-trip time from the time when the flash light L1 and the light beam L2 are emitted to the time when they return as the first reflected light and the second reflected light after being reflected by the object 20, then the distance to the object 20 is given by cτ/2 where c denotes the speed of light in the air.

In the example shown in Fig. 9, the round-trip time of the flash light L1 is represented as τ = to + Δt × (A1 - A2)/(A0 + A1 - 2 × A2). In this equation, A2 corresponds to the detected amount of noise light contained in A0 and A1. On the other hand, the round-trip time of the light beam L2 is represented as τ = to + Δt + Δt × (A2 - A0)/(A1 + A2 - 2 × A0). In this equation, A0 corresponds to the detected amount of noise light contained in A1 and A2. Depending on the application, the detected amount of noise light may not be considered.

In each frame, the processing circuit 300 causes the light emitting apparatus 100 to simultaneously emit the flash light L1 and the light beam L2, and causes the image sensor 210 to detect the first reflected light and the second reflected light within the same exposure period. By this operation, it becomes possible to increase the number of exposures per frame. As a result, it is possible to improve the S/N ratio of the signal detected by the image sensor 210, which makes it possible to achieve high-accuracy distance measurement.

In a case where there is a large difference between the distance to the object 20 measured by the flash light L1 and the distance to the object 20 measured by the light beam L2, there is a possibility that a large time difference occurs between the timing at which the first reflected light is incident on the light receiving apparatus 200 and the timing at which the second reflected light is incident on the light receiving apparatus 200. In this case, a relative time shift may be provided between the emission timing of the flash light L1 and the emission timing of the light beam L2 such that the first reflected light and the second reflected light can be detected within a common exposure period.

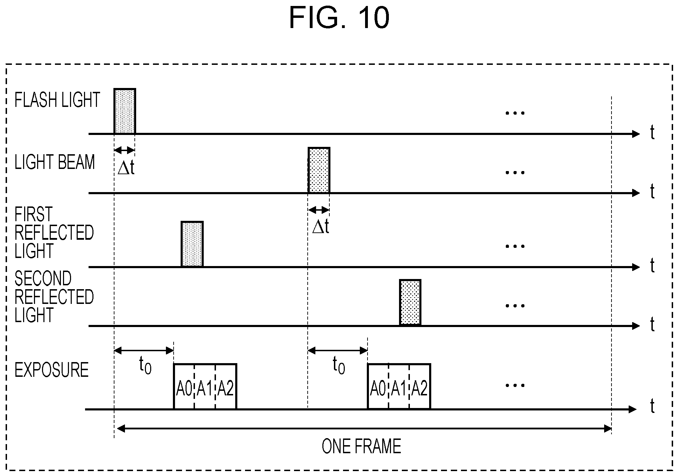

Fig. 10 is a diagram schematically showing a second example regarding emission timings of the flash light L1 and the light beam L2 emitted from the light emitting apparatus 100, incidence timings of the first reflected light and the second reflected light on the light receiving apparatus 200, and exposure timings of the light receiving apparatus 200, which occur in one frame. In the example shown in Fig. 10, the light emitting operation for the flash light L1 and the exposure operation for the first reflected light are independent of the light emitting operation for the light beam L2 and the exposure operation for the second reflected light. In this case, it is allowed to separately set the exposure period for detecting the first reflected light and the exposure period for detecting the second reflected light. Therefore, even in a case where there is a large difference between the distance to the object 20 measured by the flash light L1 and the distance to the object 20 measured by the light beam L2, it is possible to measure the distance to the object 20 with no problem.

### (Modification of First Embodiment)

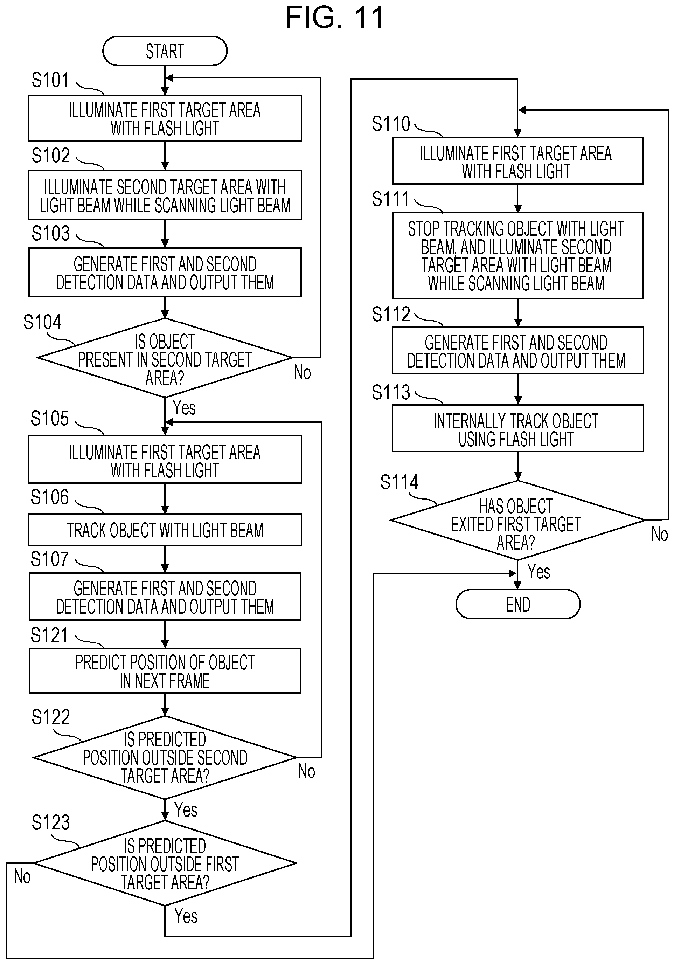

Next, a modification of the first embodiment is described with reference to Fig. 11. Fig. 11 is a flowchart of a distance measurement operation according to the modification of the first embodiment. The modification of the first embodiment is different from the first embodiment in the operations in steps S121 to S123.

### (Step S121)

The processing circuit 300 predicts a future position of the object 20 based on the information regarding the position of the object 20 included in the second detection data. The "future" position may be a position in a next frame or a position in a frame which is a plurality of frames ahead.

The future position of the object 20 may be predicted, for example, as follows. A motion vector of the object 20 in the three-dimensional space may be calculated from the distance data over frames to the current frame acquired via the operation performed repeatedly, and the future position of the object 20 may be predicted based on the motion vector. Alternatively, an optical flow of the object 20 may be calculated from the luminance data over frames to the current frame acquired by the operation performed repeatedly, and the future position of the object 20 may be predicted based on the optical flow.

### (Step S122)

The processing circuit 300 determines whether or not the predicted position of the object 20 is outside the second target area 30T2. In a case where the predicted position of the object 20 is not outside the second target area 30T2, the processing circuit 300 repeatedly executes the operations in steps S105 to S122, and continues tracking the object 20 by the light beam L2.

### (Step S123)

In a case where the predicted position of the object 20 is outside the second target area 30T2, the processing circuit 300 determines whether or not the predicted position is within the first target area 30T1. The determination criterion is the same as that described in step S109 in the first embodiment. When the object 20 is not present in the first target area 30T1, the processing circuit 300 ends the tracking of the object 20 by the flash light L1 and the light beam L2. The processing circuit 300 may restart the operation in step S101.

By performing the operations in steps S121 to step S123 according to the modification of the first embodiment, it is possible to obtain effects described below. That is, when the object 20 moves from the second target area 30T2 to the first target area 30T1, it is possible to reduce the overhead time of simultaneously illuminating the object 20 with the flash light L1 and the light beam L2. As a result, data indicating the position of the object 20 in the distance measurement target scene can be more efficiently acquired, and this results in a further increase in the amount of acquired data.

### (Modification of Second Embodiment)

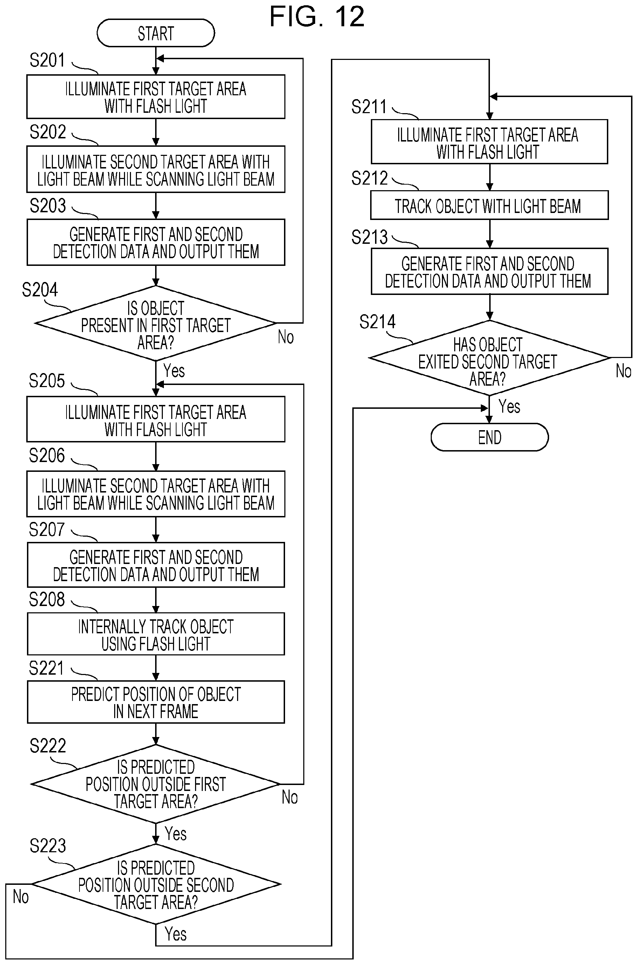

Next, a modification of the second embodiment is described with reference to Fig. 12. Fig. 12 is a flowchart of a distance measurement operation according to the modification of the second embodiment. The modification of the second embodiment is different from the second embodiment in the operations in steps S221 to S223.

### (Step S221)

The processing circuit 300 predicts a future position of the object 20 based on the information related to the object 20 included in the first detection data. The prediction of the position of the object 20 is performed in a similar manner as described above in step S121 of the modification of the first embodiment.

### (Step S222)

The processing circuit 300 determines whether or not the predicted position of the object 20 is outside the first target area 30T1. In a case where the predicted position of the object 20 is not outside the first target area 30T1, the processing circuit 300 repeatedly executes the operations in S205 to step S222, and continues the internal tracking of the object 20 by the flash light L1.

### (Step S223)

When the predicted position of the object 20 is outside the first target area 30T1, the processing circuit 300 determines whether or not the predicted position is within the second target area 30T2. The determination criterion is the same as that described in step S210 in the second embodiment. When the predicted position of the object 20 is not present in the second target area 30T2, the processing circuit 300 ends the tracking of the object 20 by the flash light L1 and the light beam L2. The processing circuit 300 may restart the operation in step S201.

By the operations in steps S221 to S223 according to the modification of the second embodiment, it is possible to obtain effects similar to those obtained according to the first embodiment.

The distance measurement apparatus according to the first and that according to the second embodiment of the present disclosure are described below for each aspect.

A distance measurement apparatus according to Aspect 1 includes a light emitting apparatus capable of emitting first light and second light having a smaller spread than the first light, and changing an emission direction of the second light, a light receiving apparatus, and a processing circuit that controls the light emitting apparatus and the light receiving apparatus and processes a signal output from the light receiving apparatus. The processing circuit performs a process including generating first distance data based on a first signal obtained by detecting, by the light receiving apparatus, first reflected light which occurs by the first light, generating second distance data based on a second signal obtained by detecting, by the light receiving apparatus, second reflected light which occurs by the second light, when an object is present outside a first target area included in an area illuminated by the first light, causing the light emitting apparatus to track the object by the second light, and when the object enters the inside of the first target area from the outside of the first target area, causing the light emitting apparatus to stop the tracking by the second light.

This distance measurement apparatus is capable of efficiently acquiring distance data of the object which enters from the outside to the inside of the first target area in a distance measurement target scene.

In the distance measurement apparatus according to Aspect 2 based on Aspect 1, after the object enters the inside of the first target area, the processing circuit stores a change in a position of the object in addition to the first distance data.

This distance measurement apparatus is capable of internally tracking the object that has entered the inside of the first target area.

In the distance measurement apparatus according to Aspect 3 based on Aspect 1 or 2, the processing circuit performs a process including causing the light emitting apparatus to scan, by the second light, a second target area located outside the first target area, detecting the object based on the second signal or the second distance data obtained by the scanning, and in response to the detection of the object, causing the light emitting apparatus to start tracking the object by the second light. This distance measurement apparatus is capable of tracking the object that is present in the second target area.

A distance measurement apparatus according to Aspect 4 includes a light emitting apparatus capable of emitting first light and second light having a smaller spread than the first light, and changing an emission direction of the second light; a light receiving apparatus, and a processing circuit that controls the light emitting apparatus and the light receiving apparatus and processes a signal output from the light receiving apparatus. The processing circuit performs a process including generating first distance data based on a first signal obtained by detecting, by the light receiving apparatus, first reflected light which occurs by the first light, generating second distance data based on a second signal obtained by detecting, by the light receiving apparatus, second reflected light which occurs by the second light, when an object is present in a first target area included in an area illuminated by the first light, storing a change in a position of the object in addition to the first distance data, and when the object moves from the inside of the first target area to the outside of the first target area, causing the light emitting apparatus to start tracking the object by the second light.

This distance measurement apparatus is capable of efficiently acquiring distance data of the object moving from the inside to the outside of a first target area in a distance measurement target scene.

In the distance measurement apparatus according to Aspect 5 based on one of Aspects 1 to 4, when the object is present outside the first target area, the processing circuit executes a distance measurement by the first light.

When the object present outside the first target area enters the inside of the first target area, the distance measurement apparatus can immediately starts the distance measurement of the object. In the distance measurement apparatus according to Aspect 6 based on one of Aspects 1 to 5, the processing circuit determines whether the object is present outside the first target area or inside the first target area, based on at least one selected from a group consisting of a strength of the first signal, a strength of the second signal, the first distance data, the second distance data, and external data input from an external sensor.

This distance measurement apparatus can determine the position of the object based on at least one selected from the group consisting of the luminance value, the distance value, and the external data.

In the distance measurement apparatus according to Aspect 7 based on one of Aspects 1 to 6, the processing circuit predicts a movement of the object from the outside to the inside of the first target area and a movement from the inside to the outside of the first distance data, based on at least one selected from a group consisting of a strength of the first signal, a strength of the second signal, the first distance data, the second distance data, and external data input from an external sensor.

This distance measurement apparatus can determine the movement of the object based on at least one selected from the group consisting of the luminance value, the distance value, and the external data.

In the distance measurement apparatus according to Aspect 8 based on one of Aspects 1 to 7, the light receiving apparatus is an image sensor including a plurality of pixels two-dimensionally arranged.

This distance measurement apparatus is capable of acquiring distance image data or luminance image data of the object.

In the distance measurement apparatus according to Aspect 9 based on Aspect 1, the processing circuit changes the first target area based on at least one selected from a group consisting of a strength of the first signal, a strength of the second signal, the first distance data, the second distance data, and external data input from an external sensor.

This distance measurement apparatus determines the first target area based on at least one selected from the distance value, the luminance value, and the external data.

In the distance measurement apparatus according to Aspect 10 based on Aspect 8, the processing circuit performs a process including detecting a position of the object based on at least one selected from a group consisting of a strength of the first signal, a strength of the second signal, the first distance data, the second distance data, and external data input from an external sensor, calculating a confidence level of a position of the object defined by a variance of the position of the object, and determining the first target area based on the confidence level of the position of the object.

This distance measurement apparatus determines the first target area based on the confidence level of the position of the object.

In the distance measurement apparatus according to Aspect 11 based on one of Aspects 1 to 10, the processing circuit integrates the first distance data and the second distance data and outputs the result.

This makes it possible for the distance measurement apparatus to easily grasp the distance data of an object at a long distance and a short distance.

In the distance measurement apparatus according to Aspect 12 based on one of Aspects 1 to 11, the first light is flash light, and the second light is a light beam.

This distance measurement apparatus is capable of efficiently acquiring distance data of the object using the flash light and the light beam which are very different in the illumination area.

In Aspect 13, there is provided a program for use in a distance measurement apparatus, the distance measurement apparatus including a light emitting apparatus capable of emitting first light and second light having a smaller spread than the first light, and changing an emission direction of the second light, a light receiving apparatus, and a processing circuit that controls the light emitting apparatus and the light receiving apparatus and processes a signal output from the light receiving apparatus, the program causing the processing circuit to execute: generating first distance data based on a first signal obtained by detecting, by the light receiving apparatus, first reflected light which occurs by the first light, generating second distance data based on a second signal obtained by detecting, by the light receiving apparatus, second reflected light which occurs by the second light, when an object is present outside a first target area included in an area illuminated by the first light, causing the light emitting apparatus to track the object by the second light, and when the object enters the inside of the first target area from the outside of the first target area, causing the light emitting apparatus to stop the tracking by the second light.

This program makes it possible to efficiently acquire distance data of the object which enters from the outside to the inside of the first target area in a distance measurement target scene.

In Aspect 14, there is provided a program for use in a distance measurement apparatus, the distance measurement apparatus including a light emitting apparatus capable of emitting first light and second light having a smaller spread than the first light, and changing an emission direction of the second light, a light receiving apparatus, and a processing circuit that controls the light emitting apparatus and the light receiving apparatus and processes a signal output from the light receiving apparatus, the program causing the processing circuit to execute: generating first distance data based on a first signal obtained by detecting, by the light receiving apparatus, first reflected light which occurs by the first light, generating second distance data based on a second signal obtained by detecting, by the light receiving apparatus, second reflected light which occurs by the second light, when an object is present in a first target area included in an area illuminated by the first light, storing a change in a position of the object in addition to the first distance data, and when the object moves from the inside of the first target area to the outside of the first target area, causing the light emitting apparatus to start tracking the object by the second light.

This program makes it possible to efficiently acquire distance data of an object moving from the inside to the outside of the first target area in the distance measurement target scene.

### Industrial Applicability

The distance measurement apparatus according to the present disclosure can be used in applications of a LiDAR system disposed on a vehicle such as an automobile, an AGV (automated guided vehicle), an air vehicle such as a UAV (unmanned aerial vehicle), etc. The distance measurement apparatus according to the present disclosure can also be used in, for example, a monitoring system attached to a building.

### Reference Signs List

- 10: distance measurement apparatus
- 20: object
- 30B: beam spot area
- 30T: target area
- 30S: scan area
- 50: vehicle
- 100: light emitting apparatus
- 110: first light source
- 120: second light source
- 200: light receiving apparatus
- 210: image sensor
- 300: processing circuit

## Claims

1. A distance measurement apparatus comprising:
a light emitting apparatus capable of emitting first light and second light having a smaller spread than the first light, and changing an emission direction of the second light;
a light receiving apparatus; and
a processing circuit that controls the light emitting apparatus and the light receiving apparatus and processes a signal output from the light receiving apparatus,
wherein the processing circuit performs a process comprising:
generating first distance data based on a first signal obtained by detecting, by the light receiving apparatus, first reflected light which occurs by the first light;
generating second distance data based on a second signal obtained by detecting, by the light receiving apparatus, second reflected light which occurs by the second light;
when an object is present outside a first target area included in an area illuminated by the first light, causing the light emitting apparatus to track the object by the second light; and
when the object enters the inside of the first target area from the outside of the first target area, causing the light emitting apparatus to stop the tracking by the second light.

2. The distance measurement apparatus according to claim 1, wherein the processing circuit stores a change in a position of the object in addition to the first distance data after the object enters the inside of the first target area.

3. The distance measurement apparatus according to claim 1 or 2, wherein the processing circuit performs a process comprising:
causing the light emitting apparatus to scan, by the second light, a second target area located outside the first target area;
detecting the object based on the second signal or the second distance data obtained by the scanning; and
in response to the detection of the object, causing the light emitting apparatus to start tracking the object by the second light.

4. The distance measurement apparatus comprising:
a light emitting apparatus capable of emitting first light and second light having a smaller spread than the first light, and changing an emission direction of the second light;
a light receiving apparatus; and
a processing circuit that controls the light emitting apparatus and the light receiving apparatus and processes a signal output from the light receiving apparatus,
wherein the processing circuit performs a process comprising:
generating first distance data based on a first signal obtained by detecting, by the light receiving apparatus, first reflected light which occurs by the first light;
generating second distance data based on a second signal obtained by detecting, by the light receiving apparatus, second reflected light which occurs by the second light;
when an object is present in a first target area included in an area illuminated by the first light, storing a change in a position of the object in addition to the first distance data; and
when the object moves from the inside of the first target area to the outside of the first target area, causing the light emitting apparatus to start tracking the object by the second light.

5. The distance measurement apparatus according to one of claims 1 to 4,
wherein the processing circuit executes
a distance measurement by the first light when the object is present outside the first target area.

6. The distance measurement apparatus according to one of claims 1 to 5, wherein the processing circuit determines whether the object is present outside the first target area or inside the first target area, based on at least one selected from a group consisting of a strength of the first signal, a strength of the second signal, the first distance data, the second distance data, and external data input from an external sensor.

7. The distance measurement apparatus according to one of claims 1 to 6, wherein the processing circuit predicts a movement of the object from the outside to the inside of the first target area and a movement from the inside to the outside of the first distance data, based on at least one selected from a group consisting of a strength of the first signal, a strength of the second signal, the first distance data, the second distance data, and external data input from an external sensor.

8. The distance measurement apparatus according to one of claims 1 to 7, wherein the light receiving apparatus is an image sensor including a plurality of pixels two-dimensionally arranged.

9. The distance measurement apparatus according to claim 1, wherein the processing circuit changes the first target area based on at least one selected from a group consisting of a strength of the first signal, a strength of the second signal, the first distance data, the second distance data, and external data input from an external sensor.

10. The distance measurement apparatus according to claim 8, wherein
the processing circuit performs a process comprising
detecting a position of the object based on at least one selected from a group consisting of a strength of the first signal, a strength of the second signal, the first distance data, the second distance data, and external data input from an external sensor,
calculating a confidence level of a position of the object defined by a variance of the position of the object, and
determining the first target area based on the confidence level of the position of the object.

11. The distance measurement apparatus according to one of claims 1 to 10, wherein the processing circuit integrates the first distance data and the second distance data and output a result.

12. The distance measurement apparatus according to one of claims 1 to 11, wherein
the first light is flash light, and
the second light is a light beam.

13. A program for use in a distance measurement apparatus, the distance measurement apparatus including:
a light emitting apparatus capable of emitting first light and second light having a smaller spread than the first light, and changing an emission direction of the second light;
a light receiving apparatus; and
a processing circuit that controls the light emitting apparatus and the light receiving apparatus and processes a signal output from the light receiving apparatus,
the program causing the processing circuit to execute:
generating first distance data based on a first signal obtained by detecting, by the light receiving apparatus, first reflected light which occurs by the first light;
generating second distance data based on a second signal obtained by detecting, by the light receiving apparatus, second reflected light which occurs by the second light;
when an object is present outside a first target area included in an area illuminated by the first light, causing the light emitting apparatus to track the object by the second light; and
when the object enters the inside of the first target area from the outside of the first target area, causing the light emitting apparatus to stop the tracking by the second light.

14. A program for use in a distance measurement apparatus, the distance measurement apparatus including:
a light emitting apparatus capable of emitting first light and second light having a smaller spread than the first light, and changing an emission direction of the second light;
a light receiving apparatus; and
a processing circuit that controls the light emitting apparatus and the light receiving apparatus and processes a signal output from the light receiving apparatus,
the program causing the processing circuit to execute:
generating first distance data based on a first signal obtained by detecting, by the light receiving apparatus, first reflected light which occurs by the first light;
generating second distance data based on a second signal obtained by detecting, by the light receiving apparatus, second reflected light which occurs by the second light;
when an object is present in a first target area included in an area illuminated by the first light, storing a change in a position of the object in addition to the first distance data; and
when the object moves from the inside of the first target area to the outside of the first target area, causing the light emitting apparatus to start tracking the object by the second light.
